# EUROPÄISCHE PATENTSCHRIFT

(11) **EP 2 637 881 B1**
(45) Veröffentlichungstag und Bekanntmachung des Hinweises auf die Patenterteilung: **28.10.2015**
(21) Anmeldenummer: 11779461.0
(22) Anmeldetag: 09.11.2011
(51) Int. Cl.: B60H 1/00, H02J 7/14

(54) **VERFAHREN ZUR VERTEILUNG VON ENERGIE IN EINEM ELEKTROFAHRZEUG UND ELEKTROFAHRZEUG**
METHOD FOR DISTRIBUTING ENERGY IN AN ELECTRIC VEHICLE AND ELECTRIC VEHICLE
PROCÉDÉ POUR LA RÉPARTITION DE L'ÉNERGIE DANS UN VÉHICULE ÉLECTRIQUE ET VÉHICULE ÉLECTRIQUE

(30) Priorität: 10.11.2010 DE 102010043690
(43) Veröffentlichungstag der Anmeldung: 18.09.2013
(73) Patentinhaber: Continental Automotive GmbH, 30165 Hannover (DE)
(72) Erfinder: BÖLD, Martin, 93051 Regensburg (DE); FOKKELMAN, Joris, 93105 Tegernheim (DE); HOFMANN, Karsten, 93186 Pettendorf (DE); SEMSEY, Akos, 93051 Regensburg (DE); WEIGAND, Christoph, 93051 Regensburg (DE)
(86) Internationale Anmeldenummer: PCT/EP2011/069766
(87) Internationale Veröffentlichungsnummer: WO 2012/062815

(56) Entgegenhaltungen:
- EP-A1- 1 129 892
- EP-A1- 2 091 127
- EP-A2- 0 811 757
- GB-A- 2 466 081
- US-A1- 2004 168 454
- US-A1- 2008 078 542

## Beschreibung

Die Erfindung betrifft ein Verfahren zum Verteilen von Energie in einem Elektrofahrzeug sowie ein Elektrofahrzeug, in dem die zur Verfügung stehende Energie entsprechend verteilbar ist.

Viele Fahrzeuge der Zukunft werden elektrisch angetrieben, wobei als Energiespeicher eine mehr oder weniger große Batterie dienen wird. Bisher basiert die Elektromobilität auf dem hochvolumigen Einsatz von Batterien als Energiespeicher. Hierbei spielt die Größe der eingesetzten Batterie eine zentrale Rolle, da dadurch sowohl die Kosten als auch das gesamte Fahrzeuggewicht stark beeinflusst werden. Daher ist es das Ziel, eine möglichst kleine und leichte Batterie einzusetzen, um damit Gewicht, Platz und Kosten zu sparen.

Um einen möglichst großen Energieanteil aus der Batterie für den elektrischen Antrieb verwenden zu können, sollte die Batterie möglichst auf dem für sie optimalen Temperaturniveau gehalten werden, unabhängig von der jeweiligen Außentemperatur. Des Weiteren kostet auch die Temperierung des Fahrzeuginnenraums elektrische Energie, die dann für den Antrieb des Elektrofahrzeugs fehlt. Durch Komfortfunktionen, wie Klimatisierung im Sommer und Heizung im Winter, gehen bis zu 50 % der Antriebsenergie verloren, was die Reichweite des Elektrofahrzeugs stärk reduziert.

Elektrofahrzeuge befinden sich in der Entwicklungsphase. Bisher werden zur Reichweitenverlängerung von Elektrofahrzeugen Range Extender mit einer Hubraumgröße von mindestens 1000 bis 1400 ccm vorgeschlagen. Die Range Extender stammen meist von Motoren der bisher am Markt verfügbaren Kraftfahrzeuge und sind daher deutlich größer als eigentlich notwendig wäre. Durch ihre Größe können die Elektrofahrzeuge auch im Betrieb mit leerer Aneine akzeptable Höchstgeschwindigkeit und Beschleunigung erreichen.

Allerdings sind die großen Range Extender sehr schwer und benötigen viel Platz im Fahrzeug. Kleinere Range Extender werden bisher nicht eingesetzt, da sie im Betrieb bei leerer Antriebsbatterie nur reduzierte Fahrleistungen (z.B. geringere Höchstgeschwindigkeit und schlechte Beschleunigung) leisten könnten.

Die Druckschrift US 2004/0168454 A1 beschreibt eine Klimaanlage für Fahrzeuge, wobei ein Verbrennungsmotor eine elektrische Maschine antreibt, deren Leistung einer Batterie zugeführt wird, um diese zu laden. Die erzeugte Leistung wird ausschließlich der Batterie zugeführt. Ein Kompressor der Klimaanlage erhält ebenso Energie von der Batterie. Die Klimaanlage temperiert ausschließlich den Fahrzeuginnenraum, wobei Temperaturen ausschließlich als Innen- und Außentemperaturen des Fahrzeugs erfasst werden.

Die Druckschrift EP 0 811 757 A2 beschreibt eine Vorrichtung zur Steuerung von Zusatzausstattung), die von einem Verbrennungsmotor angetrieben wird, unter anderem eine Klimaanlage. Die Klimaanlage dient ausschließlich zur Temperierung eines Fahrzeuginnenraums.

Aufgabe der vorliegenden Erfindung ist es daher, ein Verfahren anzugeben, mit dem die einem Elektrofahrzeug zur Verfügung stehende Energiemenge so verteilt werden kann, dass sie optimal für eine gegebene Fahrt genutzt werden kann. Es soll außerdem ein entsprechendes Fahrzeug angegeben werden.

Diese Aufgabe wird gelöst durch das Verfahren zur Verteilung von Energie in einem Elektrofahrzeug nach Anspruch 1 sowie das Elektrofahrzeug nach Anspruch 12. Die jeweiligen abhängigen Ansprüche geben vorteilhafte Weiterbildungen des erfindungsgemäßen Verfahrens und des erfindungsgemäßen Elektrofahrzeugs an.

Erfindungsgemäß wird ein Verfahren zur Verteilung von Energie in einem Elektrofahrzeug angegeben. Dabei wird das Verfahren in einem Elektrofahrzeug durchgeführt, welches zumindest einen elektrischen Energiespeicher, und zumindest ein Konditionierungsmodul, mit welchem elektrische Energie aus Kraftstoff erzeugbar ist, als Energiequellen und zumindest eine Antriebsmaschine aufweist.

Vorzugsweise wird die Energie erfindungsgemäß als elektrische Energie verteilt, d.h. ein Strom wird den entsprechenden Verbrauchern entsprechend der vorgesehenen Verteilung zugeführt. Gleichbedeutend mit der Verteilung der Energie ist auch eine Verteilung der Leistung, die entsprechend geregelt werden kann.

Der zumindest eine Energiespeicher ist vorzugsweise ein Akkumulator, eine Batterie, eine Brennstoffzelle oder eine andere galvanische Zelle.

Das zumindest eine Konditionierungsmodul weist vorzugsweise eine Verbrennungskraftmaschine und einen elektrischen Generator auf, wobei die Verbrennungskraftmaschine den elektrischen Generator antreibt. Mit dem Konditionierungsmodul kann daher vorzugsweise ebenfalls elektrische Energie bereitgestellt werden. Generell kann das Konditionierungsmodul auch als elektrischer Generator angesehen werden.

Erfindungsgemäß wird nun vor Beginn der Fahrt oder zu Beginn einer Fahrt, also beispielsweise vor dem Anlassen des Motors oder vor dem ersten Losfahren, Information über die Fahrt aufgenommen. Zusätzlich kann auch Information über einen Zustand des Fahrzeugs aufgenommen, beispielsweise gemessen, werden. Vorzugsweise wird die Information durch eine geeignete Vorrichtung des Elektrofahrzeugs aufgenommen.

Diese Information kann u.a. die während der Fahrt zurückzulegende Entfernung, ein Reichweitenwunsch, eine Länge der Fahrstrecke bis zur nächsten Ladestelle bzw. Tankstelle, ein Höhenprofil der Fahrt, ein Fahrerprofil, Umweltbedingungen der Fahrt, ein Füllzustand des das Konditionierungsmodul mit Kraftstoff versorgenden Kraftstoffbehälters, ein Ladezustand des zumindest elektrischen Energiespeichers und/oder ein Betriebsmodus des Konditionierungsmoduls sein. Es ist möglich, die Informationen als Funktion der Fahrtzeit während der Fahrt und/oder als Funktion einer während der Fahrt zurückgelegten Strecke aufzunehmen.

In einer vorteilhaften Ausgestaltung des erfindungsgemäßen Verfahrens kann die Information vollständig oder zum Teil aufgenommen werden, indem sie über ein Eingabegerät, wie beispielsweise eine Tastatur, eine Maus, ein Joy-Stick, ein Touch-Screen und/oder ein Track Pad, eingegeben werden. Alternativ oder zusätzlich kann auch ein Teil der Information aufgenommen werden, indem sie aus einem Speicher, einem Navigationsgerät oder über ein Internetzugangsgerät von einem Server eingelesen wird.

Es ist auch möglich, zumindest einen Teil der Information durch Messungen aufzunehmen. Auf diese Weise können insbesondere solche Informationen, die das Fahrzeug betreffen, aufgenommen werden, wie beispielsweise der Füllstand des genannten Tanks oder der Ladezustand des elektrischen Energiespeichers.

In einer besonders vorteilhaften Ausgestaltung wird nur eine gewünschte Reichweite durch ein Eingabegerät angegeben. Andere Informationen, insbesondere der Füllstand des genannten Tanks und der Ladezustand des elektrischen Energiespeichers, können automatisch gemessen werden. Es kann dann vorteilhaft aus den gemessenen Größen eine maximal mögliche Reichweite bestimmt werden und dann einem Benutzer die Möglichkeit gegeben werden, mittels des Eingabegerätes gewünschte Reichweiten zwischen Null und der maximal möglichen Reichweite zu wählen.

Als vom Benutzer einstellbare Reichweiten kann einerseits die elektrische Mindestreichweite vorgegeben werden, welche die Reichweite ist, die das Fahrzeug alleine aufgrund der Ladung des elektrischen Energiespeichers zurücklegen kann, aber auch die Maximalreichweite, welche die Reichweite ist, die das Fahrzeug unter Verwendung der gesamten zur Verfügung stehenden Energie, d.h. der Energie des elektrischen Energiespeichers und der mittels des Konditionierungsmoduls erzeugbaren elektrischen Energie aufgrund des zur Verfügung stehenden Kraftstoffinhalts möglich ist. Ist der Reichweitenwunsch größer als die elektrische Reichweite, kann das Konditionierungsmodul verwendet werden, um den elektrischen Energiespeicher nachzuladen.

In einer bevorzugten Ausführungsform kann aus der aufgenommenen Information ermittelt werden, ob die mit den vorhandenen Energiequellen erzeugbare Energie zur Durchführung einer gewünschten Fahrt hinreichend ist und es kann ein Warnsignal, beispielsweise als Signalton oder als optisches Signal, ausausgegeben werden, wenn sich aus der Information über die Fahrt ergibt, dass die geplante Fahrt nicht mit der aus dem elektrischen Energiespeicher zur Verfügung stehenden Energie möglich ist oder nicht mit der Gesamtenergie aus elektrischem Energiespeicher und Konditionierungsmodul möglich ist oder nur unter anderen Bedingungen vollständig möglich ist.

Wird die Energieverteilung auf die erreichbare Reichweite hin vorgenommen, wird vorzugsweise bei der erzielbaren Reichweite eine Sicherheitsmarge berücksichtigt, um eventuelle Ungenauigkeiten, beispielsweise durch das Fahrprofil, Umwelteinflüsse und/oder Messungenauigkeiten, zu kompensieren.

Erfindungsgemäß wird nun während der Fahrt die Energie bzw. Leistung von dem zumindest einen elektrischen Energiespeicher auf die zumindest eine Antriebsmaschine des Fahrzeugs, zumindest eine Innenraum-Klimatisierungsvorrichtung zur Klimatisierung des Innenraums des Fahrzeugs und/oder zumindest eine Energiespeicher-Klimatisierungsvorrichtung zur Klimatisierung des zumindest einen elektrischen Energiespeichers verteilt. Außerdem wird Energie von zumindest einem Konditionierungsmodul zum einen auf die zumindest eine Innenraum-Klimatisierungsvorrichtung und zum anderen auf die zumindest eine Energiespeicher-Klimatisierungsvorrichtung und/oder den zumindest einen elektrischen Energiespeicher verteilt.

Es kann also die Energie von dem zumindest einen elektrischen Energiespeicher zwischen der Antriebsmaschine des Fahrzeugs, der Innenraum-Klimatisierungsvorrichtung und/oder der Energiespeicher-Klimatisierungsvorrichtung verteilt werden. Die vom Konditionierungsmodul bereitgestellte Energie kann auf die zumindest eine Innenraum-Klimatisierungsvorrichtung, die zumindest eine Energiespeicher-Klimatisierungsvorrichtung und außerdem auch auf den zumindest einen elektrischen Energiespeicher verteilt werden.

Im einfachsten Fall weist also das Elektrofahrzeug einen elektrischen Energiespeicher und eine Antriebsmaschine auf, wobei der Antriebsmaschine elektrische Energie aus dem elektrischen Energiespeicher zugeführt wird. Basierend auf der gegebenen Information wird dem elektrischen Energiespeicher Energie aus dem zumindest einen Konditionierungsmodul zugeführt, so dass eine gewünschte Fahrt durchführbar ist. Dabei kann die Energiezuführung durch das Konditionierungsmodul entsprechend der aufgenommenen Informationen geregelt werden. Weist das Konditionierungsmodul einen Verbrennungsmotor auf, ist es beispielsweise möglich, abhängig von den Gegebenheiten der Fahrt bzw. der Strecke dem elektrischen Energiespeicher mittels des Konditionierungsmoduls nur auf einem oder mehreren Teilabschnitten der Gesamtstrecke Energie zuzuführen, und auf zumindest einem Teilabschnitt, der beispielsweise bestimmten Lärmschutzerfordernissen oder Emissionserfordernissen unterliegt, das Konditionierungsmodul nicht zu betreiben.

Bevorzugterweise weist das Fahrzeug außerdem zumindest eine der genannten Klimatisierungsvorrichtungen zur Klimatisierung des Innenraums des Fahrzeugs und/oder des elektrischen Energiespeichers auf. Derartige Klimatisierungsvorrichtungen können Heizungen und/oder Kühlvorrichtungen, wie beispielsweise Klimaanlagen, sein.

Hierbei kann dann anhand der Informationen gesteuert werden, wie viel Energie vom elektrischen Energiespeicher zum Betrieb der Klimatisierungsvorrichtungen bereitgestellt wird und wie viel Energie zum Betrieb der Klimatisierungsvorrichtungen vom Konditionierungsmodul bereitgestellt wird. Auch hier können, wie vorstehend beschrieben, Gegebenheiten der Fahrt bzw. der während der Fahrt zurückgelegten Strecke berücksichtigt werden.

Vorteilhaft kann die Energie aus dem zumindest einen elektrischen Energiespeicher und dem zumindest einen Konditionierungsmodul entsprechend der aufgenommenen Information so verteilt werden, dass die Fahrt hinsichtlich eines oder mehrerer der folgenden Kriterien optimiert wird.

Zum einen kann die Sicherheit zur Erreichung des Zielortes optimiert werden, der insbesondere dahingehend ausgewählt werden kann, ob sich dort der elektrische Energiespeicher oder ein Kraftstofftank für das Konditionierungsmodul nachladen bzw. nachfüllen lassen. Die Energieverteilung kann weiter auf die bestmögliche Effizienz des gesamten Antriebsystems optimiert werden.

Es kann elektrische Energie aus dem Stromnetz bevorzugt eingesetzt werden, da hierdurch die Umweltfreundlichkeit des Fahrzeugs verbessert wird.

Die Energie kann so verteilt werden, dass ein "Notbetrieb" vermieden wird, bei dem der elektrische Energiespeicher vollkommen entleert ist, und das Konditionierungsmodul die gesamte Energie für die Bewegung des Fahrzeugs zur Verfügung stellt. Im Notbetrieb steht nur eine sehr reduzierte Leistung und damit reduzierte Höchstgeschwindigkeit und geringere Beschleunigung zur Verfügung (z.B. maximal 50 km/h bei ungefähr 10 kW Leistung durch das Konditionierungsmodul).

Erfindungsgemäß kann das Konditionierungsmodul deutlich kleiner gestaltet werden, als dies notwendig wäre, wenn es die gesamte Leistung zur Fortbewegung des Fahrzeugs liefern müsste. Vorteilhafterweise ist das Konditionierungsmodul so dimensioniert, dass es zumindest den Leistungsbedarf von Heizung, Lüftung und/oder Kühlung liefern kann. Hierdurch kann das Konditionierungsmodul gerade ausgestaltet sein, um die Komfortfunktionen alleine mit Energie beliefern zu können.

In einer weiteren vorteilhaften Ausführungsform entspricht die maximale Leistung des Konditionierungsmoduls der mittleren Antriebsleistung des Fahrzeugs. Auf diese Weise kann über das Konditionierungsmodul ein Notbetrieb gewährleistet werden.

Vorteilhafterweise ist die maximale Leistung, die mittels des Konditionierungsmoduls bereitstellbar ist, ≥ 4 kW, besonders bevorzugt ≥ 6 kW und/oder ≤ 12 kW, besonders bevorzugt ≤ 10 kW. Durch ein derartig dimensioniertes Konditionierungsmodul können die oben beschriebenen Komfortfunktionen wie auch ein Notbetrieb für ein durchschnittliches Standardfahrzeug ohne zusätzliche Isoliermaßnahmen gewährleistet werden.

Es kann vorteilhaft sein, die Energie so zu verteilen, dass der eventuell vorhandenen Innenraum-Klimatisierungsvorrichtung und/oder der eventuell vorhandenen Energiespeicher-Klimatisierungsvorrichtung Energie nur vom Konditionierungsmodul oder zum größtmöglichen Anteil vom Konditionierungsmodul zugeführt wird und/oder der Antriebsmaschine Energie nur oder mit dem größtmöglichen Anteil vom elektrischen Energiespeicher zugeführt wird. Hierdurch kann erreicht werden, dass die Klimatisierungsvorrichtungen die Fahrleistung des Fahrzeugs nicht beeinträchtigen.

In einer vorteilhaften Ausgestaltung der Erfindung wird dem Fahrer vor und/oder während der Fahrt, besonders bevorzugt regelmäßig oder kontinuierlich, die gegenwärtig verbleibende Reichweite und/oder der Ladezustand des elektrischen Energiespeichers und/oder der Füllzustand des Kraftstofftanks angezeigt.

Die Erfindung betrifft auch ein Elektrofahrzeug, mit zumindest einer Antriebsmaschine, zumindest einem elektrischen Energiespeicher, zumindest einem Konditionierungsmodul, mit dem elektrische Energie aus Kraftstoff erzeugbar ist, und zumindest einer Informationsaufnahmevorrichtung, mit der Informationen über eine bevorstehende Fahrt des Fahrzeugs aufnehmbar sind. Das erfindungsgemäße Fahrzeug weist außerdem zumindest eine Energieverteilungsvorrichtung auf, mit der Energie aus dem zumindest einen Energiespeicher und dem zumindest einen Konditionierungsmodul wie oben beschrieben verteilbar ist.

Das Fahrzeug weist vorzugsweise auch zumindest eine Innenraum-Klimatisierungsvorrichtung zur Klimatisierung eines Fahrzeuginnenraums und/oder eine Energiespeicher-Klimatisierungsvorrichtung zur Klimatisierung des zumindest einen elektrischen Energiespeichers auf.

Das Elektrofahrzeug kann auch Vorrichtungen aufweisen, mit denen die Reichweite anzeigbar ist und/oder die bei leerem Tank oder leerem elektrischem Energiespeicher ein Warnsignal abgeben. Die Reichweitenanzeige ist auch deshalb vorteilhaft, da durch die Konditionierung des elektrischen Energiespeichers und die Klimatisierung auch Energie aus der nachrangigen Energiequelle verwendet wird und der Fahrer des Fahrzeugs auch diese Quelle im Blick haben sollte.

Vorteilhaft besteht auch die Möglichkeit, das Konditionierungsmodul des Fahrzeugs zur direkten Erzeugung von Strom zu verwenden. Bei Bedarf lässt sich daher vorteilhaft das Konditionierungsmodul mit einem Schalter ein- oder ausschalten. Auf diese Weise kann beispielsweise das Konditionierungsmodul für APU-Modus für den Strombedarf auf einem Campingplatz eingeschaltet oder für die Durchfahrt durch emissions- oder lärmsensible Bereiche ausgeschaltet werden.

Wie vorstehend bereits beschrieben, können auch Informationen über eine spezielle Schnittstelle bzw. mobile Navigationssysteme bezogen werden. Vor dem Hintergrund, dass Navigation in Zukunft auch als Service aus dem Internet bezogen wird, beispielsweise mittels eines iPhones, kann dadurch auch Service-Provider-Information zur Steuerung des Konditionierungsmoduls mit einbezogen werden. Beispielsweise könnte das Konditionierungsmodul sich dann in ausgewiesenen Gebieten, die beispielsweise anfällig für Lärm oder Emission sind, selbst abschalten und ein Durchfahren solcher Gebiete könnte bei der beschriebenen Energieverteilung berücksichtigt werden.

Die Erfindung führt zu einer deutlichen Komfortsteigerung für den Fahrer beim Betrieb eines Elektrofahrzeugs, insbesondere durch die zusätzliche Ausstattung mit dem Konditionierungsmodul. Durch die geeignete Verteilung der Energie wird auch bei größeren Strecken verhindert, dass das Fahrzeug in einer Notlaufphase betrieben werden muss.

Durch die Eingabe einer Zielreichweite kann die Größe des Konditionierungsmoduls für das Elektrofahrzeug reduziert werden. Das Fahrzeug kann somit gewicht- und kostenoptimiert betrieben werden, ohne eine Einschränkung von Fahreigenschaften des Elektrofahrzeugs. Die Reichweite des Elektrofahrzeugs wird erhöht, ohne dass hierfür zusätzliche Batterien erforderlich wären. Dadurch können Kosten, Platz und Gewicht eingespart und der Verbrauch des Fahrzeugs gesenkt werden. Es wird außerdem das Risiko reduziert, mit dem Elektrofahrzeug wegen einer leeren Batterie liegen zu bleiben und daher im Notbetrieb weiterfahren zu müssen.

Im Folgenden soll die Erfindung beispielhaft beschrieben werden.

Es zeigt
- Figur 1: ein Diagramm, das das erfindungsgemäße Verfahren veranschaulicht, und
- Figur 2: ein erfindungsgemäßes Elektrofahrzeug.

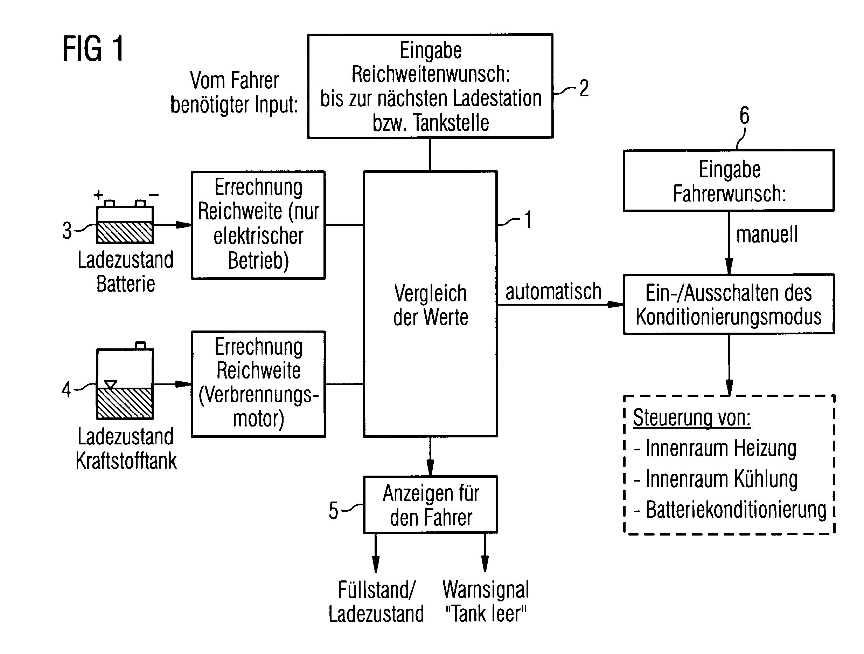

Figur 1 zeigt schematisch die Durchführung des erfindungsgemäßen Verfahrens in einem Elektrofahrzeug. Hierbei verarbeitet eine zentrale Recheneinheit 1 eine gewünschte Reichweite, die über eine Eingabevorrichtung 2 von einem Fahrer des Fahrzeugs eingebbar ist. Dies kann beispielsweise die zurückzulegende Strecke bis zu einer nächsten Ladestation oder Tankstelle sein. Die zentrale Recheneinheit 1 verarbeitet außerdem den Ladezustand einer Batterie 3 als elektrischer Energiespeicher und den Füllstand eines Kraftstofftanks 4, mit dem ein Konditionierungsmodul antreibbar ist, das elektrische Energie zur Verfügung stellt. Aus den Ladezuständen der Batterie 3 und des Kraftstofftanks 4 kann dann eine elektrische Reichweite und/oder eine Gesamtreichweite berechnet werden. Die zentrale Recheneinheit 1 kann außerdem Anzeigen 5 für den Fahrer generieren, die ihn über den Füllstand des Tanks 4 und/oder den Ladezustand der Batterie 3 informieren und ein Warnsignal erzeugen können, wenn Batterie und/oder Tank leer gehen oder eine gewünschte Reichweite die elektrische Reichweite oder die Gesamtreichweite übersteigt.

Die zentrale Recheneinheit 1 kann außerdem die aus der Batterie 3 und dem Konditionierungsmodul zur Verfügung stehende Energie verteilen. Dabei wird die Energie der Batterie 3 beispielsweise auf die Antriebsmaschine des Fahrzeugs, eine Innenraum-Temperierungsvorrichtung, beispielsweise eine Klimaanlage oder Heizung, und/oder eine Batterie- Temperierungsvorrichtung zur Temperierung des elektrischen Energiespeichers verteilt. Die durch das Konditionierungsmodul erzeugte Energie kann verteilt werden auf die Innenraum-Temperierungsvorrichtung, die Energiespeicher-Temperierungsvorrichtung sowie auf die Batterie 3.

Die zentrale Recheneinheit 1 kann auch weitere Informationen über die geplante Fahrt aufnehmen, wie beispielsweise die zurückzulegende Entfernung, ein Höhenprofil der Fahrt, ein Fahrerprofil, Umweltbedingungen, Betriebsmodi des Konditionierungsmoduls und ähnliche.

Die Verteilung der Energie im Fahrzeug kann gesteuert werden, um beispielsweise die Reichweite zu maximieren, wobei auch Gegebenheiten der Strecke berücksichtigt werden können, wie beispielsweise die Notwendigkeit der Vermeidung von Emissionen oder Lärm.

Das Konditionierungsmodul kann beispielsweise eine Brennstoffzelle sein oder eine Verbrennungskraftmaschine und einen mit dieser antreibbaren elektrischen Generator aufweisen. Es ist möglich, die Energie so zu verteilen, dass die durch die Batterie 3 zur Verfügung gestellte Energie nur oder zum größtmöglichen Anteil der Antriebsmaschine zur Verfügung gestellt wird und die durch das Konditionierungsmodul bereitgestellte Energie nur oder zum größtmöglichen Anteil den Temperierungsvorrichtungen.

Über die Eingabevorrichtung 2 kann eine gewünschte Reichweite von einem Benutzer eingegeben werden. Es kann hierbei auch der Ladezustand der Batterie 3 und der Füllzustand des Kraftstofftanks berücksichtigt werden und dem Benutzer eine maximale elektrische oder maximale Gesamtreichweite vorgegeben werden, innerhalb der er die gewünschte Reichweite auswählen kann. Es kann insbesondere ein Warnsignal abgegeben werden, wenn der Benutzer eine Reichweite auswählt, die die mögliche Reichweite übersteigt.

Erfindungsgemäß kann auch eine weitere Eingabe über einen Schalter 6 erfolgen, mit welchem das Konditionierungsmodul ein- und ausschaltbar ist. Hierdurch kann das Konditionierungsmodul als unabhängiger Energieproduzent verwendet werden oder gegebenenfalls ausgeschaltet werden, wenn dies erforderlich werden sollte, beispielsweise um Lärm und Emission zu vermeiden.

Als Beispiel sei weiter ein Fahrzeug angeführt, welches einen Elektromotor und ein Konditionierungsmodul aufweist, wobei das Konditionierungsmodul auch zur Reichweitenverlängerung eingesetzt werden kann. Zu Beginn einer Fahrt mit dem Elektrofahrzeug sind dem Fahrzeug weder der Fahrplan noch die Absicht des Fahrers bekannt. Es ist außerdem nicht bekannt, wann und wo getankt, geparkt oder nachgeladen wird. Diese Informationen müssen auch nicht in einem Navigationsgerät vorhanden sein. Der Fahrer kann dann die Möglichkeit haben, vor Beginn der Fahrt, beispielsweise über einen Drehknopf, die geplante Länge der Strecke einzustellen.

Gibt der Fahrer eine kurze Strecke für die Fahrt vor, so kann das Fahrzeug rein elektrisch betrieben werden. Gibt er eine mittlere Streckenlänge ein, fährt das Fahrzeug abhängig vom Ladezustand der Batterie teilweise mit Unterstützung des Konditionierungsmoduls, wobei die Energieverteilung automatisch gesteuert wird. Gibt der Fahrer eine lange Strecke für die Fahrt vor, kann das Konditionierungsmodul frühzeitig aktiviert werden, damit bereits während der rein elektrischen Fahrt möglichst viel zusätzliche elektrische Energie vom Konditionierungsmodul bereitgestellt werden kann, um ohne Notbetrieb möglichst weit zu kommen. Hierzu kann das Konditionierungsmodul beispielsweise die Batterie laden.

Hierdurch kann die zur Verfügung stehende Energie mit Hilfe der Reichweitenangabe optimal verteilt und ausgenutzt werden, wobei vorrangig elektrische Energie auf Kurzstrecken verwendet werden kann und bei längeren Strecken der Notbetrieb vermieden werden kann.

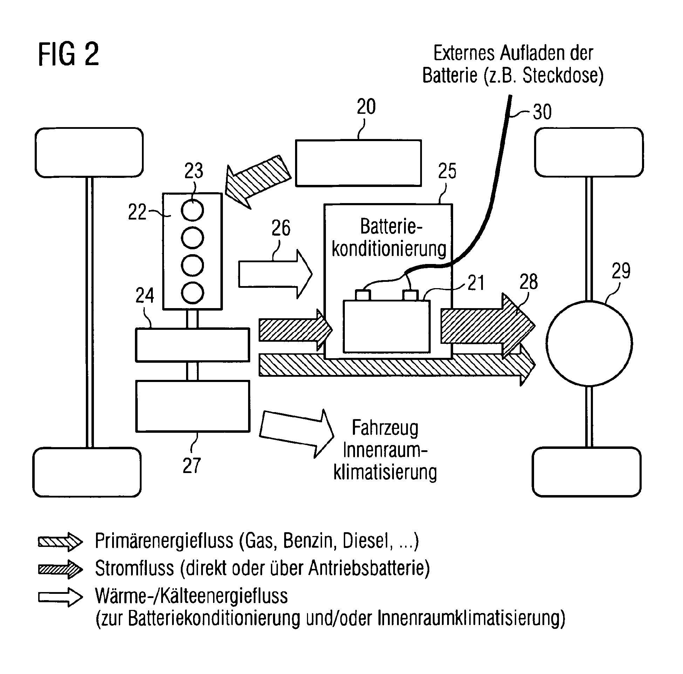

Figur 2 zeigt ein erfindungsgemäßes Elektrofahrzeug, in welchem das erfindungsgemäße Verfahren durchgeführt werden kann. Das Fahrzeug verfügt über zwei Energiequellen, einen Kraftstofftank 20 sowie eine Batterie 21. Mittels des Kraftstofftanks 20 kann einem Konditionierungsmodul 22 Kraftstoff zugeführt werden. Das Konditionierungsmodul 22 weist hierbei einen Verbrennungsmotor 23 sowie einen Generator 24 auf, mit dem elektrische Energie erzeugbar ist. Die vom Generator 24 erzeugte elektrische Energie kann der Batterie 21 zugeführt werden. Darüber hinaus kann vom Verbrennungsmotor 23 eine Batteriekonditionierung 25, mit der die Batterie 21 temperierbar ist, angetrieben werden, und Wärmeenergie 26 zugeführt werden. Die Batteriekonditionierung 25 kann auch zur Kühlung der Batterie 21 geeignet sein. Die Kühlvorrichtung kann hierbei mittels des Generators 24 und/oder der Batterie 21 mit elektrischer Energie versorgt werden. Der Verbrennungsmotor 23 des Konditionierungsmoduls kann außerdem einen Kompressor 27 einer Klimatisierungsvorrichtung bzw. einer HVAC-Vorrichtung (Heating, Ventilating and Air-Conditioning) antreiben. Mittels dieses Kompressors 27 kann beispielsweise ein Fahrzeuginnenraum klimatisiert werden. Auch die Batterie 21 kann mittels dieses Kompressors 27 klimatisiert werden. Neben einem direkten Antrieb des Kompressors 27 ist es auch möglich, den Kompressor 27 mittels elektrischer Energie anzutreiben, die durch das Konditionierungsmodul 22 und/oder die Batterie 21 bereitgestellt wird. Schließlich ist elektrische Energie 28 aus der Batterie 21 dem Elektromotor bzw. Elektroantrieb 29 zuführbar. Zur Ladung der Batterie 21 im Stillstand des Fahrzeugs kann der Batterie 21 auch von außen mittels eines Anschlusses 30 elektrische Energie zugeführt werden.

### Bezugszeichenliste

- 1: Zentrale Recheneinheit
- 2: Eingabevorrichtung
- 3: Batterie
- 4: Kraftstofftank
- 5: Anzeige
- 20: Kraftstofftank
- 21: Batterie
- 22: Konditionierungsmodul
- 23: Verbrennungsmotor
- 24: Generator
- 25: Batteriekonditionierung
- 26: Wärmeenergie
- 27: Kompressor
- 28: elektrische Energie
- 29: Elektroantrieb
- 30: Batterieanschluss

## Patentansprüche

1. Verfahren zur Verteilung von Energie in einem Elektrofahrzeug mit zumindest einem elektrischen Energiespeicher (3) und zumindest einem Konditionierungsmodul, mit dem elektrische Energie aus Kraftstoff erzeugbar ist, als Energiequellen, wobei vor oder zu Beginn einer Fahrt mit dem Elektrofahrzeug Information über die Fahrt oder auch einen Zustand des Elektrofahrzeugs aufgenommen wird,
und während der Fahrt anhand der Information Energie von zumindest einem elektrischen Energiespeicher (3) auf zumindest eine Antriebsmaschine des Fahrzeugs, zumindest eine Innenraumklimatisierungsvorrichtung zur Klimatisierung eines Innenraums des Fahrzeugs und/oder zumindest eine Energiespeicher-Klimatisierungsvorrichtung zur Klimatisierung des zumindest einen elektrischen Energiespeichers (3) verteilt wird und von dem zumindest einen Konditionierungsmodul zum einen auf die zumindest eine Energiespeicher-Klimatisierungsvorrichtung und zum anderen auf die zumindest eine Innenraum-Klimatisierungsvorrichtung und/oder den zumindest einen elektrischen Energiespeicher (3) verteilt wird.

2. Verfahren nach dem vorhergehenden Anspruch,
**dadurch gekennzeichnet, dass** zumindest ein Teil der Information oder alle Informationen aufgenommen werden, indem sie über ein Eingabegerät (2) eingegeben werden.

3. Verfahren nach einem der vorhergehenden Ansprüche,
**dadurch gekennzeichnet, dass** zumindest ein Teil der Information oder alle Informationen aufgenommen werden, indem sie aus einem Speicher,
einem Navigationsgerät und/oder einem Internetzugangsgerät eingelesen wird.

4. Verfahren nach einem der vorhergehenden Ansprüche,
**dadurch gekennzeichnet, dass** die Information
eine während der Fahrt zurückgelegte Entfernung, ein Höhenprofil der Fahrt, ein Fahrerprofil, Umweltbedingungen, ein Ladezustand des zumindest einen elektrischen Energiespeichers (3), ein Füllzustand zumindest eines Kraftstofftanks zur Versorgung des Konditionierungsmoduls mit Kraftstoff, Informationen über eine nächste Tankmöglichkeit, Informationen über eine nächste Lademöglichkeit und/oder ein Betriebsmodus des Konditionierungsmoduls ist oder enthält.

5. Verfahren nach einem der vorhergehenden Ansprüche,
**dadurch gekennzeichnet, dass** die Information für zumindest einen Streckenabschnitt eine bevorzugte der Energiequellen angibt.

6. Verfahren nach einem der vorhergehenden Ansprüche,
**dadurch gekennzeichnet, dass** aus der aufgenommenen Information ermittelt wird, ob mit den jeweiligen Energiequellen eine hinreichende Menge an Energie zur Verfügung gestellt werden kann, um die Fahrt vollständig durchzuführen und dass ein Warnsignal erzeugt wird, wenn sich hierbei ergibt, dass die Fahrt nicht vollständig oder nur unter anderen Bedingungen vollständig durchführbar ist.

7. Verfahren nach einem der vorhergehenden Ansprüche,
**dadurch gekennzeichnet, dass** das Konditionierungsmodul eine Verbrennungskraftmaschine und einen mit dieser antreibbaren elektrischen Generator aufweist und/oder zumindest eine Brennstoffzelle aufweist, wobei bevorzugt die Verbrennungskraftmaschine mit Kraftstoff, Gas, Diesel oder Benzin betrieben wird.

8. Verfahren nach einem der vorhergehenden Ansprüche,
**dadurch gekennzeichnet, dass** der Innenraum-Klimatisierungsvorrichtung und der Energiespeicher-Klimatisierungsvorrichtung Energie nur von dem zumindest einen Konditionierungsmodul zugeführt wird und/oder dass der Antriebsmaschine Energie nur von dem zumindest einen elektrischen Energiespeicher (3) zugeführt wird.

9. Verfahren nach einem der vorhergehenden Ansprüche,
**dadurch gekennzeichnet, dass**, vorzugsweise über einen Wählschalter (2), als Information oder Teil der Information eine gewünschte Reichweite eingegeben wird, wobei vorzugsweise zunächst eine elektrische Maximalreichweite und/oder eine Maximalreichweite berechnet wird und zum Eingeben vorgegeben wird, und die gewünschte Reichweite zwischen Null und der errechneten Maximalreichweite oder der Maximalreichweite eingegeben wird.

10. Verfahren nach Anspruch 9,
**dadurch gekennzeichnet, dass**, wenn die gewünschte Reichweite größer ist als die elektrische Maximalreichweite, der Antriebsmaschine und/oder dem zumindest einen elektrischen Energiespeicher (3) Energie von dem zumindest einen Konditionierungsmodul zugeleitet wird.

11. Verfahren nach einem der vorhergehenden Ansprüche,
**dadurch gekennzeichnet, dass** einem Nutzer vor und/oder während der Fahrt eine gegenwärtig verbleibende Reichweite angezeigt wird.

12. Elektrofahrzeug mit
zumindest einer Antriebsmaschine,
zumindest einem elektrischen Energiespeicher (3),
zumindest einem Konditionierungsmodul, mit dem elektrische Energie aus Kraftstoff erzeugbar ist,
zumindest einer Informationsaufnahmevorrichtung (2), mit der Informationen über eine vorstehende Fahrt des Fahrzeugs aufnehmbar sind, sowie
zumindest einer Energieverteilungsvorrichtung (1), mit der während einer Fahrt anhand der Information Energie vom zumindest einen elektrischen Energiespeicher (3) auf zumindest eine Antriebsmaschine des Fahrzeugs, zumindest eine Innenraumklimatisierungsvorrichtung zur Klimatisierung eines Innenraums des Fahrzeugs und/oder zumindest eine Energiespeicher-Klimatisierungsvorrichtung zur Klimatisierung des zumindest einen elektrischen Energiespeichers (3) verteilbar ist und von dem zumindest einen Konditionierungsmodul zum einen auf die zumindest eine Energiespeicher-Klimatisierungsvorrichtung und zum anderen auf die zumindest eine Innenraum-Klimatisierungsvorrichtung und/oder den zumindest einen elektrischen Energiespeicher (3) verteilbar ist.

13. Elektrofahrzeug nach dem vorhergehenden Anspruch,
**gekennzeichnet durch** einen Schalter (6) zum Ein- und Ausschalten des Konditionierungsmoduls.

14. Elektrofahrzeug nach einem der beiden vorhergehenden Ansprüche,
**dadurch gekennzeichnet, dass** während der Fahrt die Energie in einem Verfahren nach einem der Ansprüche 1 bis 11 verteilbar ist.

## Claims

1. Method for distributing energy in an electric vehicle having, as energy sources, at least one electrical energy store (3) and at least one conditioning module with which electrical energy can be generated from fuel, wherein, before or at the start of a journey with the electric vehicle, information about the journey or else about a state of the electric vehicle is recorded
and during the journey energy from at least one electrical energy store (3) is distributed, on the basis of the information, to at least one drive machine of the vehicle, at least one passenger compartment air-conditioning device for air-conditioning a passenger compartment of the vehicle and/or at least one energy store air-conditioning device for air-conditioning the at least one electrical energy store (3), and is distributed from the at least one conditioning module on the one hand to the at least one energy store air-conditioning device and on the other hand to the at least one passenger compartment air-conditioning device and/or the at least one electrical energy store (3).

2. Method according to the preceding claim,
**characterized in that** at least some of the information or all of the information is recorded by inputting said information by means of an input device (2).

3. Method according to one of the preceding claims,
**characterized in that** at least some of the information or all of the information is recorded by reading it in from a memory, a navigation device and/or an Internet access device.

4. Method according to one of the preceding claims,
**characterized in that** the information is or contains a distance traveled during the journey, an altitude profile of the journey, a driver profile, environmental conditions, a state of charge
of the at least one electrical energy store (3), a filling state of at least one fuel tank for supplying the conditioning module with fuel, information about the next refueling possibility, information about the next charging possibility and/or an operating mode of the conditioning module.

5. Method according to one of the preceding claims,
**characterized in that** the information for at least one route section indicates a preferred energy source of the energy sources.

6. Method according to one of the preceding claims,
**characterized in that** it is determined from the recorded information whether the respective energy sources can be used to make available a sufficient quantity of energy to carry out the journey completely, and **in that** a warning signal is generated if it becomes apparent here that the journey cannot be carried out completely or can only be carried out completely under different conditions.

7. Method according to one of the preceding claims,
**characterized in that** the conditioning module has an internal combustion engine and an electric generator which can be driven therewith and/or has at least one fuel cell, wherein the internal combustion engine is preferably operated with fuel, gas, diesel or petrol.

8. Method according to one of the preceding claims,
**characterized in that** the passenger compartment air-conditioning device and the energy store air-conditioning device are supplied with energy only from the at least one conditioning module, and/or **in that** the drive machine is supplied with energy only from the at least one electrical energy store (3).

9. Method according to one of the preceding claims, **characterized in that** a desired range is input, preferably by means of a selection switch (2), as information or as part of the information,
wherein preferably at first an electric maximum range and/or a maximum range are/is calculated and are/is predefined for input, and the desired range is input between zero and the calculated maximum range or the maximum range.

10. Method according to Claim 9,
**characterized in that** when the desired range is greater than the electrical maximum range, energy from the at least one conditioning module is fed to the drive machine and/or the at least one electrical energy store (3).

11. Method according to one of the preceding claims,
**characterized in that** a currently remaining range is indicated to a user before and/or during the journey.

12. Electric vehicle having
at least one drive machine,
at least one electrical energy store (3),
at least one conditioning module with which electrical energy can be generated from fuel,
at least one information-recording device (2) with which information about an imminent journey of the vehicle can be recorded, and
at least one energy distribution device (1) with which during a journey energy from at least one electrical energy store (3) can be distributed, on the basis of the information, to at least one drive machine of the vehicle, at least one passenger compartment air-conditioning device for air-conditioning a passenger compartment of the vehicle and/or at least one energy store air-conditioning device for air-conditioning the at least one electrical energy store (3), and can be distributed from the at least one conditioning module on the one hand to the at least one energy store air-conditioning device and on the other hand to the at least one passenger compartment air-conditioning device
and/or the at least one electrical energy store (3).

13. Electric vehicle according to the preceding claim,
**characterized by** a switch (6) for switching the conditioning module on and off.

14. Electric vehicle according to one of the two preceding claims,
**characterized in that** during the journey the energy can be distributed in a method according to one of Claims 1 to 11.

## Revendications

1. Procédé de distribution de l'énergie dans un véhicule électrique avec au moins un accumulateur d'énergie électrique (3) et au moins un module de conditionnement, avec lequel il est possible de produire de l'énergie électrique à partir d'un carburant, en tant que source d'énergie, des informations concernant le trajet ou un état du véhicule électrique étant enregistrées avant ou au début d'un trajet,
et, pendant le trajet, à l'aide des informations, l'énergie étant distribuée, à l'aide des informations, d'au moins un accumulateur d'énergie électrique (3) vers au moins un mécanisme d'entraînement du véhicule, au moins un dispositif de climatisation de l'habitacle pour la climatisation d'un habitacle du véhicule et/ou au moins un dispositif de climatisation d'accumulateur d'énergie pour la climatisation de l'au moins un accumulateur d'énergie (3) et d'au moins un module de conditionnement d'une part vers l'au moins un dispositif de climatisation d'accumulateur d'énergie et d'autre part vers l'au moins un dispositif de climatisation d'habitacle et/ou l'au moins un accumulateur d'énergie électrique (3).

2. Procédé selon la revendication précédente, **caractérisé en ce qu'**au moins une partie des informations ou toutes les informations sont enregistrées grâce à une saisie par l'intermédiaire d'un appareil de saisie (2).

3. Procédé selon l'une des revendications précédentes, **caractérisé en ce qu'**au moins une partie des informations ou toutes les informations sont enregistrées en étant lues à partir d'une mémoire, d'un appareil de navigation et/ou d'un appareil d'accès à Internet.

4. Procédé selon l'une des revendications précédentes, **caractérisé en ce que** les informations sont ou contiennent une distance parcourue pendant le trajet, un profil d'altitude du trajet, un profil de conducteur, des conditions environnementales, un état de charge de l'au moins un accumulateur d'énergie électrique (3), un état de remplissage d'au moins un réservoir de carburant pour l'alimentation du module de conditionnement en carburant, des informations concernant une prochaine opportunité de faire le plein, des informations concernant une prochaine opportunité de charge et/ou un mode de fonctionnement du module de conditionnement.

5. Procédé selon l'une des revendications précédentes, **caractérisé en ce que** les informations indiquent, pour au moins une partie du trajet, une source d'énergie préférée.

6. Procédé selon l'une des revendications précédentes, **caractérisé en ce que**, à partir des informations enregistrées, il est déterminé si, avec les sources d'énergie respectives, une quantité suffisante d'énergie peut être mise à disposition pour effectuer l'ensemble du trajet et **en ce qu'**un signal d'avertissement est généré s'il en résulte que le trajet ne peut pas être effectué entièrement ou uniquement dans des conditions différentes.

7. Procédé selon l'une des revendications précédentes, **caractérisé en ce que** le module de conditionnement comprend un moteur à combustion interne et un générateur électrique pouvant être entraîné par celui-ci et/ou au moins une pile à combustible, la pile à combustible fonctionnant de préférence avec du carburant, du gaz, du gasoil ou de l'essence.

8. Procédé selon l'une des revendications précédentes, **caractérisé en ce que** le dispositif de climatisation d'habitacle et le dispositif de climatisation d'accumulateur d'énergie sont alimentés en énergie uniquement par l'au moins un module de conditionnement et/ou **en ce que** le moteur d'entraînement est alimenté en énergie uniquement par l'au moins un accumulateur d'énergie électrique (3).

9. Procédé selon l'une des revendications précédentes, **caractérisé en ce que**, de préférence, à l'aide d'un sélecteur (2), en tant qu'informations ou partie des informations, un rayon d'action souhaité est saisi, de préférence au préalable un rayon d'action électrique maximal et/ou un rayon d'action maximal étant calculé et prédéterminé à la saisie et le rayon d'action souhaité entre zéro et le rayon d'action maximal calculé ou le rayon d'action maximal est saisi.

10. Procédé selon la revendication 9, **caractérisé en ce que**, lorsque le rayon d'action souhaité est supérieur au rayon d'action électrique maximal, le moteur d'entraînement (3) est alimenté en énergie par l'au moins un module de conditionnement.

11. Procédé selon l'une des revendications précédentes, **caractérisé en ce qu'**un rayon d'action résiduel actuel est affiché à l'attention d'un utilisateur avant et/ou pendant le trajet.

12. Véhicule électrique avec
au moins un moteur d'entraînement,
au moins un accumulateur d'énergie électrique (3),
au moins un module de conditionnement, avec lequel il est possible de générer de l'énergie électrique à partir d'un carburant,
au moins un dispositif d'enregistrement d'informations (2), avec lequel il est possible d'enregistrer des informations concernant un trajet du véhicule, ainsi que au moins un dispositif de distribution d'énergie (1), avec lequel il est possible de distribuer, pendant un trajet, sur la base des informations, l'énergie d'au moins un accumulateur d'énergie électrique (3) vers au moins un moteur d'entraînement du véhicule, au moins un dispositif de climatisation d'habitacle pour la climatisation d'un habitacle du véhicule et/ou au moins un dispositif de climatisation d'accumulateur d'énergie pour la climatisation de l'au moins un accumulateur d'énergie électrique (3) et, de l'au moins un module de conditionnement, d'une part, vers l'au moins un dispositif de climatisation d'accumulateur d'énergie et, d'autre part vers l'au moins un dispositif de climatisation d'habitacle et/ou l'au moins un accumulateur d'énergie électrique (3).

13. Véhicule électrique selon la revendication précédente, **caractérisé par** un interrupteur (6) pour la mise en marche et d'arrêt du module de conditionnement.

14. Véhicule électrique selon l'une des deux revendications précédentes, **caractérisé en ce que**, pendant le trajet, l'énergie peut être distribuée conformément à un procédé selon l'une des revendications 1 à 11.
